# EUROPEAN PATENT SPECIFICATION

(11) **EP 1 656 981 B1**
(45) Date of publication and mention of the grant of the patent: **31.01.2018**
(21) Application number: 05024244.5
(22) Date of filing: 08.11.2005
(51) Int. Cl.: B01D 39/20

(54) **Air filtration media and method of making**
Luftfiltermedien und Herstellungsverfahren
Matériau de filtration et procédé de fabrication

(30) Priority: 12.11.2004 US 987019
(43) Date of publication of application: 17.05.2006
(73) Proprietor: Johns Manville International, Inc., Denver, CO 80202 (US)
(72) Inventor: Kern, Charles Francis, Marietta, Ohio 45750 (US); Miele, Philip Francis, Highlands Ranch, Colorado 80126 (US); Christensen, Bernd, 97877 Wertheim (DE)
(74) Representative: Mai Dörr Besier European Patent Attorneys

(56) References cited:
- EP-A- 0 583 086
- EP-A- 0 990 729
- US-A- 5 318 990
- US-A- 5 728 187
- US-B1- 6 261 335

## Description

### BACKGROUND OF THE INVENTION

### Field of the Invention

The present invention relates to a filtration media and, in particular, to glass fiber air filtration media made using a formaldehyde-free resin binding agent to adhere the glass fibers together.

### Description of the Related Art

Heating, ventilating and air conditioning systems used in commercial and industrial buildings and similar buildings or structures are provided with air filtration units using sock, bag, pleated or other conventional filters to clean the air being circulated throughout the buildings or structures. Typically, the air filtration media, used in these filtration units, is a single phase filtration media comprising a high efficiency, fibrous filtration layer reinforced on its downstream surface with a permeable backing sheet. This type of air filtration media is relatively inexpensive and since the air filtration media is changed frequently in most applications, the dust holding capacity of the single phase air filtration media is adequate.

Glass fiber filtration media are commonly used in air filtration applications. U.S. Pat. No. 5,728,187 discloses an air filtration media formed from a filtration layer of glass fibers, bonded together at their points of intersection with a binder. The binder used to bind the fibers is typically a phenolic binder, e.g., a phenol-formaldehyde. Other types of binders can be used, e.g., styrene-butadiene binders, ethyl vinyl acetate binders, and acrylic latex binders. The filtration layer has a density between about 2.5 and about 4.0 g/929 cm² (g/ft²) and the average diameter of the fibers in the filtration layer is within a range from 7.62x10⁻⁵ to 10.41x10⁻⁵ cm (3.0x10⁻⁵ to 4.1x10⁻⁵ inches). The filtration layer has an average air filtration efficiency of at least 80% and the pressure drop across the thickness of the filtration layer is no greater than 0.30 inches of water.

U.S. Pat. No. 6,261,335 discloses a biosoluble glass fiber filtration media that includes a fibrous filtration layer of randomly oriented, entangled glass fibers which has an initial efficiency of 25% or greater as measured by ASHRAE 52.1 test method. The glass fibers forming the media have a biodissolution rate in excess of 150 ng/cm²/hr and a mean diameter between about 6.35x10⁻⁵ cm (2.5x10⁻⁵ inches) and about 27.94x10⁻⁵ cm (11.0x10⁻⁵ inches). Typically, the filtration layer has a thickness ranging from about 0.30 cm (0.12 inches) to about 0.89 cm (0.35 inches) and a density ranging from about 3.0 g/929 cm² (3.0 g/ft²) to about 8.0 g/929 cm² (8.0 g/ft²). The filtration has an initial pressure drop of about 0.35 inches of water or less and a dirt holding capacity of about 1.5g/929 cm² (1.5 g/ft²) or greater.

The known air filtration media typically involve very fine glass fibers. Typically, all such products on the market today use a urea-extended phenol-formaldehyde binding agent to bind the glass fibers together. This serves to provide a filtration media that, when subjected to an air stream in an HVAC system, has the integrity to withstand the abrasion of the air flow and thus allow filtering of the air without detriment to the filter media. However, while the air filtration media currently in commercial use performs well, the manufacture and/or subsequent use of these glass fiber air filtration media results in the off-gassing of formaldehyde. Because of the inherent problems of the toxicity and potential health effects encountered during exposure to even small amounts of formaldehyde, there exists a real need for useful alternatives to formaldehyde-based binding resins which are applicable in an air filtration media.

### SUMMARY OF THE INVENTION

The present invention relates to novel filtration media made from very fine glass fibers having an average fiber diameter within a range from 7.62x10⁻⁵ to 5.1x10⁻⁴ cm (3x10⁻⁵ to 2x10⁻⁴ inches) and being further defined in claim 4 the media comprises a formaldehyde-free binding agent to bind the glass fibers together. The binder comprises a polycarboxy polymer and a polyol, and preferably a catalyst. Thus, this invention eliminates the off-gassing emissions potential by using a binder that contains no formaldehyde, but achieves similar bond strength, chemical resistance and filtering characteristics as the phenol-formaldehyde type binders used today.

The present invention is based at least in part upon the discovery that a particular formaldehyde-free binder, namely one comprised of a polycarboxy polymer and polyol, can provide performance at least as good as the phenolic binders, while offering distinct advantages over other binders. In general, while avoiding the problems of emissions, the present invention also offers greater ease in processing and better performance than other non-phenolic binders.

### BRIEF DESCRIPTION OF THE DRAWING FIGURES

Fig. 1 is a schematic perspective of the air filtration media of the present invention.
Fig. 2 is a schematic perspective of a dual phase air filtration media incorporating the air filtration media of the present invention.

### DETAILED DESCRIPTION OF THE PREFERRED EMBODIMENTS

The filtration media of the present invention and as defined in claim 4comprises very fine glass fibers having an average fiber diameter within a range from 7.62x10⁻⁵ to 5.1x10⁻⁴ cm (3x10⁻⁵ to 2x10⁻⁴ inches) and a formaldehyde-free binding agent to bind the glass fibers together at their points of intersection. The binder comprises a polycarboxy polymer and a polyol.

The air filtration media of the present invention comprises a thin fibrous filtration layer. The filtration layer is 0.30 cm (0.12) to 0.89 cm (0.35 inches) thick; substantially uniform in density and thickness throughout; and essentially free of macroscopic voids which would permit portions of an air or gas stream to pass through the filtration layer essentially unfiltered. With its substantially uniform density and thickness, the filtration layer provides consistent or substantially consistent filtration performance over its entire surface area.

Preferably, the filtration layers of the air filtration media of the present invention have a density ranging from 3 g/929 cm² (3 g/ft²) to 8 g/929 cm² (8 g/ft²). Also, the filtration layers have an initial pressure drop across their thickness "T" from, preferably, no greater than 0.89 cm (0.35 inches) of water. Additionally, the filtration layers preferably have a dirt holding capacity of 1.5 g/929 cm² (1.5 g/ft²) or greater.

The initial pressure drops across the filtration layers are measured before any dust loading of the filtration layer. The thicknesses of the filtration layers set forth in this specification are measured by placing a one foot square 630 gram weight on a 929 cm² (one foot square) section of filtration layer and measuring the thickness of the filtration layer when compressed by the weight.

The "dirt-holding capacity" of the filtration media is the weight of dust particles in grams, that causes the two foot square section of the filtration media being tested to have a one inch of water column pressure drop across its thickness.

The filtration layer is formed of fibers which are bonded together at their points of intersection with a formaldehyde-free binder. The fibers for the filtration layer are flame attenuated glass fibers. These fibers are formed by drawing continuous primary glass filaments from a conventional feeder or pot and introducing these continuous primary glass filaments into the high energy gaseous blast of a flame attenuation burner, e.g. a Selas burner, where the continuous filaments are reheated, attenuated and formed into fine diameter staple or finite length glass fibers of the desired diameter within the aforementioned diameter range.

The fiber diameters set forth in this specification are measured by a micronaire flow resistance test.

In accordance with the present invention, a formaldehyde-free binder comprised of a polycarboxy polymer and a polyol is then sprayed onto the finite length fibers and the fibers are collected to form the filtration layer, e.g. on a moving chain, collection conveyor. Preferably, the polycarboxy polymer/polyol binder is applied at a rate of approximately 8% to 20% by weight of glass and binder. Typically, the filtration layer is collected on a substrate layer, a permeable backing sheet carried on the collection conveyor. The permeable backing sheet, when used, facilitates the handling of the filtration layer, increases the integrity of the filtration layer, and becomes part of the finished product. Preferably, the filtration layer, with or without a permeable backing sheet, is then passed between sear rolls which at least partially cure the binder in the filtration layer. The sear rolls are spaced apart a selected distance to set the thickness of the filtration layer.

As discussed above, when used, the permeable backing sheet increases the integrity of the air filtration media by reinforcing the filtration layer, but adds little or nothing to the filtration efficiency or dirt holding capacity of the air filtration media. The backing sheet is a permeable sheet, such as, but not limited to, a light weight (e.g. 13.6-17.0 g/m² (0.4-0.5 oz. per square yard)), non-woven, open mesh scrim of polyester, nylon, glass or similar materials.

The filtration layer can be used as a filtration media without the permeable backing sheet. However, typically, the permeable backing sheet is bonded to the downstream surface of the filtration layer to reinforce the filtration layer and give the filtration layer greater integrity. The filtration layer can also be used in dual-phase or other multi-phase air filtration media. Preferably, the upstream filtration layer of the filtration media is bonded to the upstream surface of the downstream filtration layer; made of coarser fibers than those of the downstream filtration layer; and increases the dust holding capacity of the dual-phase or multi-phase air filtration media. Typically, the upstream filtration layer is made of glass, polymeric or other fibers normally used in fibrous filtration media.

In a preferred embodiment of the present invention, the fibrous filtration layer as defined in claim 4 has a density ranging from about 3 g/ 929 cm² (3 g/ft²) to 8 g/929 cm² (8 g/ft²); is substantially uniform in density and thickness throughout; the initial pressure drop across the thickness "T" of the filtration layer is no greater than 0.89 cm (0.35 inches) of water.

The present invention overcomes the problems of the prior art, the off-gassing emissions potential of formaldehyde, by using a formaldehyde-free binder. Yet, the resultant air filtration media achieves similar bond resistance, chemical resistance and filtering characteristics. It has been discovered that a particular formaldehyde-free binder, namely one comprised of polycarboxy polymer and polyol, can effectively be used with the fine glass fibers to form the air filtration media without adversely impacting the filtration aspects of the media. Additionally, it has been discovered that the new air filtration media, made with the formaldehyde-free binder comprised of a polycarboxy polymer and polyol, can be made using conventional fabrication processes. The binder comprised of a polycarboxy polymer and polyol provides performance at least as good as the phenolic binders, while offering distinct advantages over other binders. In general, while avoiding the problems of emissions, the present invention also offers greater ease in processing and better performance than other non-phenolic binders.

The formaldehyde-free binder that is used in the present invention is a binder comprised of a polycarboxy polymer and a polyol. Preferably, the binder comprises an aqueous solution of a polycarboxy polymer having a number average base molecular weight of less than 5,000, and a polyol. Preferably, the pH of the binder is no greater than 4.5, and most preferably no greater than 3.5. More preferably, the polyol used is triethanolamine. It is also preferred that the binder comprises a catalyst, such as an alkaline metal salt of a phosphorous-containing organic acid. More preferably, the catalyst comprises sodium hypophosphite, sodium phosphate or a mixture thereof. The preparation of such a binder, for example, is disclosed in U.S. Pat. No. 6,331,350.

The polycarboxy polymer used in the binder of the present invention comprises an organic polymer or oligomer containing more than one pendant carboxy group. The polycarboxy polymer may be a homopolymer or copolymer prepared from unsaturated carboxylic acids including but not necessarily limited to, acrylic acid, methacrylic acid, crotonic acid, isocrotonic acid, maleic acid, cinnamic acid, 2-methylmaleic acid, itaconic acid, 2-methylitaconic acid, α,β-methyleneglutaric acid, and the like. Alternative, the polycarboxy polymer may be prepared from unsaturated anhydrides including, but not necessarily limited to, maleic anhydride, methacrylic anhydride, and the like, as well as mixtures thereof. Methods for polymerizing these acids and anhydrides are well-known in the chemical art.

The polycarboxy polymer of the present invention may additionally comprise a copolymer of one or more of the aforementioned unsaturated carboxylic acids or anhydrides and one or more vinyl compounds including, but not necessarily limited to, styrene, α-ethylstyrene, acrylonitrile, methacrylonitrile, methyl acrylate, ethyl acrylate, n-butyl acrylate, isobutyl acrylate, methyl methacrylate, n-butyl methacrylate, isobutyl methacrylate, glycidyl methacrylate, vinyl methyl ether, vinyl acetate, and the like. Methods for preparing these copolymers are well-known in the art.

Preferred polycarboxy polymers comprise homopolymers and copolymers of polyacrylic acid It is particularly preferred that the number average base molecular weight of the polycarboxy polymer, and in particular polyacrylic acid polymer, is less than 10000, more preferably less than 5000, and most preferably 3000 or less, with about 2000 being advantageous. Combining the low molecular weight polycarboxy polymer with the low pH of the binder results in a final product which exhibits excellent recovery and rigidity.

The formaldehyde-free curable aqueous binder composition of the present invention also contains a polyol containing at least two hydroxyl groups. The polyol must be sufficiently nonvolatile such that it will substantially remain available for reaction with the polyacid in the composition during heating and curing operations. The polyol may be a compound with a number average base molecular weight less than about 1000 bearing at least two hydroxyl groups such as, for example, ethylene glycol, glycerol, pentaerythritol, trimethylol propane, sorbitol, sucrose, glucose, resorcinol, catechol, pyrogallol, glycollated ureas, 1,4-cyclohexane diol, diethanolamine, triethanolamine, and certain reactive polyols such as, for example, β-hydroxyalkylamides such as, for example, bis[N,N-di(β-hydroxyethyl)]adipamide, as may be prepared according to the teachings of U.S. Pat. No. 4,076,917, or it may be an addition polymer containing at least two hydroxyl groups such as, for example, polyvinyl alcohol, partially hydrolyzed polyvinyl acetate, and homopolymers or copolymers of hydroxyethyl (meth) acrylate, hydroxypropyl(meth) acrylate, and the like. The most preferred polyol for the purposes of the present invention is triethanolamine (TEA).

The ratio of the number of equivalents of carboxy, anhydride, or salts thereof of the polyacid to the number of equivalents of hydroxyl in the polyol is from 1/0,01 to 1/3. An excess of equivalents of carboxy, anhydride, or salts thereof of the polyacid to the equivalents of hydroxyl in the polyol is preferred. The more preferred ratio of the number of equivalents of carboxy, anhydride, or salts thereof in the polyacid to the number of equivalents of hydroxyl in the polyol is from 1/0.4 to 1/1. The most preferred ratio of the number of equivalents of carboxy, anhydride, or salts thereof in the polyacid to the number of equivalents of hydroxyl in the polyol is from 1/0.6 to 1/0.8, and most preferably from 1/0.65 to 1/0.75. A low ratio, approaching 0.7:1, has been found to be of particular advantage in the present invention, when combined with a low molecular weight polycarboxy polymer and the low pH binder.

The formaldehyde-free curable aqueous binder composition of the present invention also preferably contains a catalyst. Most preferably, the catalyst is a phosphorous-containing accelerator which may be a compound with a molecular weight less than 1000 such as, for example, an alkali metal polyphosphate, an alkali metal dihydrogen phosphate, a polyphosphoric acid, and an alkyl phosphinic acid or it may be an oligomer or polymer bearing phosphorous-containing groups such as, for example, addition polymers of acrylic and/or maleic acids formed in the presence of sodium hypophosphite, addition polymers prepared from ethylenically unsaturated monomers in the presence of phosphorous salt chain transfer agents or terminators, and addition polymers containing acid-functional monomer residues such as, for example, copolymerized phosphoethyl methacrylate, and like phosphonic acid esters, and copolymerized vinyl sulfonic acid monomers, and their salts. The phosphorous-containing accelerator may be used at a level of from 1 % to 40%, by weight based on the combined weight of the polyacid and the polyol. Preferred is a level of phosphorous-containing accelerator of from 2.5% to 10%, by weight based on the combined weight of the polyacid and the polyol.

The formaldehyde-free curable aqueous binder composition may contain, in addition, conventional treatment components such as, for example, emulsifiers, pigments, filler, anti-migration aids, curing agents, coalescents, wetting agents, biocides, plasticizers, organosilanes, anti-foaming agents, colorants, waxes, and anti-oxidants.

The formaldehyde-free curable aqueous binder composition may be prepared by admixing the polyacid, the polyol, and the phosphorous-containing accelerator using conventional mixing techniques. In another embodiment, a carboxyl- or anhydride-containing addition polymer and a polyol may be present in the same addition polymer, which addition polymer would contain both carboxyl, anhydride, or salts thereof functionality and hydroxyl functionality. In another embodiment, the salts of the carboxy-group are salts of functional alkanolamines with at least two hydroxyl groups such as, for example, diethanolamine, triethanolamine, dipropanolamine, and di-isopropanolamine. In an additional embodiment, the polyol and the phosphorous-containing accelerator may be present in the same addition polymer, which addition polymer may be mixed with a polyacid. In yet another embodiment the carboxyl- or anhydride-containing addition polymer, the polyol, and the phosphorous-containing accelerator may be present in the same addition polymer. Other embodiments will be apparent to one skilled in the art. As disclosed herein-above, the carboxyl groups of the polyacid may be neutralized to an extent of less than 35% with a fixed base before, during, or after the mixing to provide the aqueous composition. Neutralization may be partially effected during the formation of the polyacid.

It is also preferred that the pH of the binder be quite low, e.g., be adjusted by adding a suitable acid such as sulfuric acid. In particular, the pH of the binder is preferably no greater than 3.5 and is more preferably 3.0 or less. For excellent processing advantages have been discovered when such low pH binders are used, while also providing a product which exhibits excellent recovery and rigidity properties. The processing advantages manifest themselves in reduced accumulation of fiber in the collection box and a reduction in cure temperature. The reduction in cure temperature results in a reduction of the amount of energy needed to cure the binder, and thereby permits, if desired, the use of more water in the binder to obtain many processing benefits.

The formaldehyde-free curable aqueous composition may be applied to a nonwoven by conventional techniques such as, for example, air or airless spraying, padding, saturating, roll coating, curtain coating, beater deposition, coagulation, or the like.

While the air filtration media of the present invention is primarily intended for air filtration applications, the air filtration media of the present invention can also be used in liquid applications such as coalescent filters or mist eliminators.

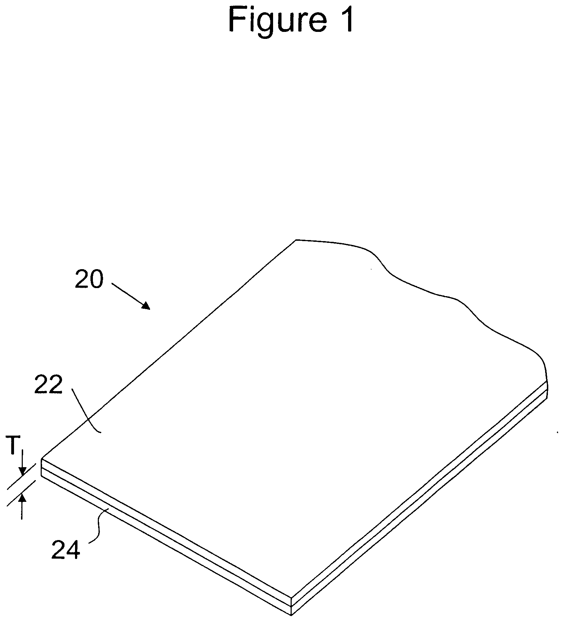

Referring now to the figures of the drawing, as shown in FIG. 1, the air filtration media 20 of the present invention comprises a thin fibrous filtration layer 22. The filtration layer 22 is formed of fibers which are bonded together at their points of intersection with a formaldehyde-free binder.

A formaldehyde-free binder is sprayed onto the finite length fibers and the fibers are collected to form the filtration layer 22, e.g. on a moving chain, collection conveyor. Typically, the filtration layer 22 is collected on a substrate layer, a permeable backing sheet 24 carried on the collection conveyor. The permeable backing sheet 24, when used, facilitates the handling of the filtration layer, increases the integrity of the filtration layer, and, as shown in FIG. 1, becomes part of the finished product. Preferably, the filtration layer 22, with or without a permeable backing sheet 24, is then passed between sear rolls which at least partially cure the binder in the filtration layer. The sear rolls are spaced apart a selected distance to set the thickness of the filtration layer 22.

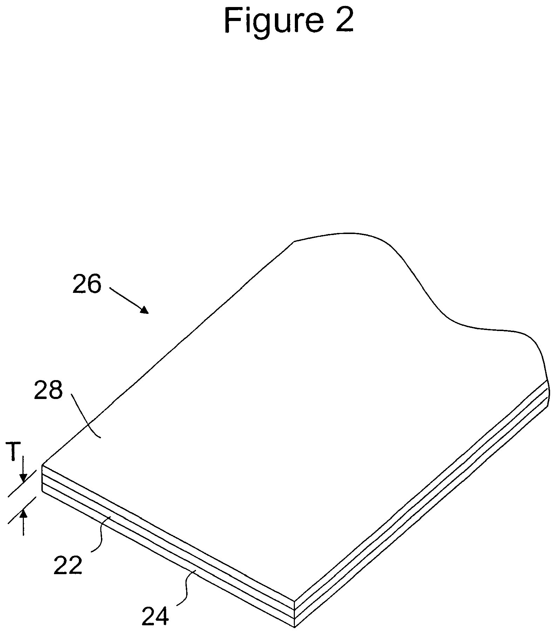

As discussed above, the filtration layer 22 can be used as a filtration media without the permeable backing sheet 24. However, typically, the permeable backing sheet 24 is bonded to the downstream surface of the filtration layer 22, as shown in FIG. 1, to reinforce the filtration layer 22 and give the filtration layer greater integrity. As shown in FIG. 2, the filtration layer 22 can also be used in dual-phase or other multi-phase air filtration media 26. Preferably, the upstream filtration layer 28 of the filtration media 26 is bonded to the upstream surface of the downstream filtration layer 22; made of coarser fibers than those of the downstream filtration layer 22; and increases the dust holding capacity of the dual-phase or multi-phase air filtration media 26. Typically, the upstream filtration layer 28 is made of glass, polymeric or other fibers normally used in fibrous filtration media. Also, the filtrations layer 22 and upstream filtration layer 28 are typically used with the permeable backing sheet 24.

In describing the invention, certain embodiments have been used to illustrate the invention and the practices thereof.

## Claims

1. A process for making a fibrous filtration media comprising forming a fibrous glass filtration layer by applying a binder to glass fibers for forming a non-woven mat, with the glass fibers having an average fiber diameter within a range from 0.76 to 5.1 micron (3x10⁻⁵ to 2x10⁻⁴ inches) and the binder comprising a polycarboxy polymer and a polyol, the mat being air laid and the glass fibers are flame attenuated glass fibers, the fibrous filtration layer has a thickness from 0.30 to 0.89 cm (0.12 to 0.35 inches).

2. The process according to claim 1, wherein the binder is applied at a rate of approximately 8% to 20% by weight of glass and binder.

3. The process according to claim 1, wherein the air laid mat is formed directly on an air permeable substrate layer.

4. A fibrous filtration media comprising a fibrous filtration layer of glass fibers bonded together at their points of intersection by a binder; the glass fibers having an average fiber diameter within a range from 0.76 to 5.1 micron (3x10⁻⁵ to 2x10⁻⁴ inches); and the binder is comprised of polycarboxy polymer and a polyol, the mat being air laid and the glass fibers are flame attenuated glass fibers, the fibrous filtration layer has a thickness from 0.30 to 0.89 cm (0.12 to 0.35 inches).

5. The fibrous filtration media of claim 4, wherein said fibrous filtration layer has a density ranging from 32.29 gr/m² to 86.11 gr/m² (3 g/ft2 to 8 g/ft2).

6. The fibrous filtration media according to at least one of the claims 4 or 5, wherein said fibrous filtration layer has a dirt holding capacity of 16.15 gr/m² (1.5 g/ft²) or greater.

7. The fibrous filtration media according to at least one of the claims 4 to 6, wherein said fibrous filtration layer has an initial pressure drop of 0.89 cm (0.35 inches) of water or less.

8. The fibrous filtration media of claim 4, wherein the binder of fibrous filtration layer comprises from 8% to 20% by weight of glass and binder.

9. The fibrous filtration media of claim 4, including a second fibrous filtration layer of air filter media bonded to a major surface of said filtration layer.

10. The fibrous filtration media of claim 4, wherein said fibrous filtration layer has a thickness from 0.30 cm to 0.89 cm (0.12 to 0.35 inches); a density ranging from 32.29 gr/m2 to 86.11 gr/m2 (3 g/ft² to 8 g/ft²); a dirt holding capacity of 16.15 gr/m2 (1.5 g/ft²) or greater; and the filtration having an initial pressure drop of 0.89 cm (0.35 inches) of water or less.

11. The fibrous filtration media of claim 4, wherein the binder comprises an aqueous solution of a polycarboxy polymer having a number average base molecular weight of less than 5,000, and a polyol, with the pH of the binder being no greater than 3.5.

12. The fibrous filtration media of claim 4, wherein the polyol used is triethanolamine.

13. The fibrous filtration media of claim 4, wherein the binder comprises a catalyst which is comprised of an alkaline metal salt of a phosphorous-containing organic acid.

14. The fibrous filtration media of claim 13, wherein the catalyst comprises sodium hypophosphite, sodium phosphate or a mixture thereof.

## Patentansprüche

1. Verfahren zur Herstellung eines fibrösen Filtermediums, umfassend das Bilden einer fibrösen Glasfilterschicht durch Auftragen eines Bindemittels auf Glasfasern, um eine nichtgewebte Matte zu bilden, wobei die Glasfasern einen durchschnittlichen Faserdurchmesser innerhalb einer Spanne von 0,76 bis 5,1 Mikrometern (3x10⁻⁵ bis 2x10⁻⁴ Zoll) aufweisen und das Bindemittel ein Polycarboxypolymer und ein Polyol umfasst, wobei die Matte luftgelegt ist und die Glasfasern flammengedämpfte Glasfasern sind, wobei die fibröse Filterschicht eine Dicke von 0,30 bis 0,89 cm (0,12 bis 0,35 Zoll) aufweist.

2. Verfahren nach Anspruch 1, wobei das Bindemittel bei einer Rate von ungefähr 8 % bis 20 % nach Gewicht von Glas und Bindemittel aufgetragen wird.

3. Verfahren nach Anspruch 1, wobei die luftgelegte Matte direkt auf einer luftdurchlässigen Substratschicht gebildet wird.

4. Fibröses Filtermedium, umfassend eine fibröse Filterschicht aus Glasfasern, die an ihren Schnittpunkten durch ein Bindemittel zusammengebunden sind; wobei die Glasfasern einen durchschnittlichen Faserdurchmesser innerhalb einer Spanne von 0,76 bis 5,1 Mikrometern (3x10⁻⁶ bis 2x10⁻⁴ Zoll) aufweisen; und das Bindemittel aus Polycarboxypolymer und einem Polyol besteht, wobei die Matte luftgelegt ist und die Glasfasern flammengedämpfte Glasfasern sind, wobei die fibröse Filterschicht eine Dicke von 0,30 bis 0,89 cm (0,12 bis 0,35 Zoll) aufweist.

5. Fibröses Filtermedium nach Anspruch 4, wobei die fibröse Filterschicht eine Dichte aufweist, die von 32,29 gr/m² bis 86,11 gr/m² (3 g/ft² bis 8 g/ft²) reicht.

6. Fibröses Filtermedium nach zumindest einem der Ansprüche 4 oder 5, wobei die fibröse Filterschicht eine Schmutzaufnahmekapazität von 16,15 gr/m² (1,5 g/ft²) oder mehr aufweist.

7. Fibröses Filtermedium nach zumindest einem der Ansprüche 4 bis 6, wobei die fibröse Filterschicht einen Anfangsdruckabfall von Wasser von 0,89 cm (0,35 Zoll) oder weniger aufweist.

8. Fibröses Filtermedium nach Anspruch 4, wobei das Bindemittel der fibrösen Filterschicht 8 % bis 20 % nach Gewicht von Glas und Bindemittel umfasst.

9. Fibröses Filtermedium nach Anspruch 4, beinhaltend eine zweite fibröse Filterschicht aus Luftfiltermedium geklebt auf eine Hauptfläche der Filterschicht.

10. Fibröses Filtermedium nach Anspruch 4, wobei die fibröse Filterschicht eine Dicke von 0,30 cm bis 0,89 cm (0,12 bis 0,35 Zoll) aufweist; eine Dichte, die von 32,29 gr/m² bis 86,11 gr/m² (3 g/ft² bis 8 g/ft²) reicht; eine Schmutzaufnahmekapazität von 16,15 gr/m² (1,5 g/ft²) oder mehr; und wobei die Filtration einen Anfangsdruckabfall von Wasser von 0,89 cm (0,35 Zoll) oder weniger aufweist.

11. Fibröses Fasermedium nach Anspruch 4, wobei das Bindemittel eine wässrige Lösung aus einem Polycarboxypolymer, die ein durchschnittliches Basismolekulargewicht von weniger als 5.000 aufweist, und ein Polyol umfasst, wobei der pH des Bindemittels nicht größer als 3,5 ist.

12. Fibröses Filtermedium nach Anspruch 4, wobei das verwendete Polyol Triethanolamin ist.

13. Fibröses Filtermedium nach Anspruch 4, wobei das Bindemittel einen Katalysator umfasst, der aus einem Alkalimetallsalz einer phosphorhaltigen organischen Säure besteht.

14. Fibröses Filtermedium nach Anspruch 13, wobei der Katalysator Natriumhypophosphit, Natriumphosphat oder eine Mischung davon umfasst.

## Revendications

1. Procédé de fabrication d'un matériau filtrant fibreux comprenant la formation d'une couche de filtration en fibres de verre par application d'un liant aux fibres de verre pour former un mat non tissé, les fibres de verre ayant un diamètre de fibre moyen dans la gamme de 0,76 à 5,1 microns (3x10⁻⁵ à 2x10⁻⁴ pouces) et le liant comprenant un polymère polycarboxy et un polyol, le mat étant étalé par voie sèche et les fibres de verre étant des fibres de verre atténuées à la flamme, la couche de filtration fibreuse ayant une épaisseur de 0,30 à 0,89 cm (0,12 à 0,35 pouce).

2. Procédé selon la revendication 1, dans lequel le liant est appliqué à raison d'environ 8 % à 20 % en poids de verre et de liant.

3. Procédé selon la revendication 1, dans lequel le mat étalé par voie sèche est formé directement sur une couche de substrat perméable à l'air.

4. Matériau filtrant fibreux comprenant une couche de filtration fibreuse en fibres de verre collées ensemble à leurs points d'intersection par un liant ; les fibres de verre ayant un diamètre de fibre moyen dans la gamme de 0,76 à 5,1 microns (3x10⁻⁵ à 2x10⁻⁴ pouces) ; et le liant étant constitué de polymère polycarboxy et d'un polyol, le mat étant étalé par voie sèche et les fibres de verre étant des fibres de verre atténuées à la flamme, la couche de filtration fibreuse ayant une épaisseur de 0,30 à 0,89 cm (0,12 à 0,35 pouce).

5. Matériau de filtration fibreux selon la revendication 4, dans lequel ladite couche de filtration fibreuse a une masse volumique de 32,29 gr/m² à 86,11 gr/m² (3 g/ft2 à 8 g/ft2).

6. Matériau filtrant fibreux selon au moins l'une des revendications 4 ou 5, dans lequel ladite couche de filtration fibreuse a une capacité de retenue des impuretés de 16,15 gr/m² (1,5 g/ft²) ou supérieure.

7. Matériau filtrant fibreux selon au moins l'une des revendications 4 à 6, dans lequel ladite couche de filtration fibreuse a une chute de pression initiale de 0,89 cm (0,35 pouce) d'eau ou moins.

8. Matériau filtrant fibreux selon la revendication 4, dans lequel le liant de la couche de filtration fibreuse comprend de 8 % à 20 % en poids de verre et de liant.

9. Matériau filtrant fibreux selon la revendication 4, comprenant une deuxième couche de filtration fibreuse de matériau de filtre à air collée à une surface principale de ladite couche de filtration.

10. Matériau filtrant fibreux selon la revendication 4, dans lequel ladite couche de filtration fibreuse a une épaisseur de 0,30 cm à 0,89 cm (0,12 à 0,35 pouce) ; une masse volumique de 32,29 gr/m2 à 86,11 gr/m2 (3 g/ft² à 8 g/ft²) ; une capacité de retenue des impuretés de 16,15 gr/m2 (1,5 g/ft²) ou supérieure ; et la filtration ayant une chute de pression initiale de 0,89 cm (0,35 pouce) d'eau ou moins.

11. Matériau filtrant fibreux selon la revendication 4, dans lequel le liant comprend une solution aqueuse de polymère polycarboxy ayant un poids moléculaire de base moyen d'au moins 5 000 et un polyol, le pH du liant n'étant pas supérieur à 3,5.

12. Matériau filtrant fibreux selon la revendication 4, dans lequel le polyol utilisé est la triéthanolamine.

13. Matériau filtrant fibreux selon la revendication 4, dans lequel le liant comprend un catalyseur qui est constitué d'un sel métallique alcalin d'un acide organique contenant du phosphore.

14. Matériau filtrant fibreux selon la revendication 13, dans lequel le catalyseur comprend l'hypophosphite de sodium, le phosphate de sodium ou un mélange de ceux-ci.
